# FASCICULE DE BREVET EUROPEEN

(11) **EP 2 215 020 B1**
(45) Date de publication et mention de la délivrance du brevet: **27.12.2017**
(21) Numéro de dépôt: 08871305.2
(22) Date de dépôt: 06.11.2008
(51) Int. Cl.: C02F 3/08

(54) **INSTALLATION POUR LE TRAITEMENT D'EAUX RESIDUAIRES ET DISQUE BIOLOGIQUE POUR UNE TELLE INSTALLATION**
INSTALLATION ZUR BEHANDLUNG VON ABWÄSSERN UND BIOLOGISCHE PLATTE FÜR SOLCH EINE INSTALLATION
INSTALLATION FOR THE TREATMENT OF WASTEWATERS AND BIOLOGICAL DISC FOR SUCH AN INSTALLATION.

(30) Priorité: 14.11.2007 FR 0707997
(43) Date de publication de la demande: 11.08.2010
(73) Titulaire: DEGREMONT, 92500 Rueil-Malmaison (FR)
(72) Inventeur: VIRLOGET, François, 69800 Saint Priest (FR)
(74) Mandataire: Cabinet Armengaud Aîné
(86) Numéro de dépôt international: PCT/FR2008/001563
(87) Numéro de publication internationale: WO 2009/092915

(56) Documents cités:
- EP-A- 0 182 380
- EP-A- 0 324 314
- DE-A1- 1 584 909
- US-A- 4 690 755
- US-A- 5 425 874

## Description

L'invention est relative à une installation pour le traitement d'eaux résiduaires urbaines et/ou industrielles comportant un bassin recevant l'eau à traiter et une série de disques à garnissage, parallèles verticaux, montés sur un arbre horizontal, partiellement immergés dans l'eau à traiter et entraînés en rotation de sorte que la biomasse qui se développe à la surface du garnissage des disques est mise alternativement en contact avec l'eau à traiter et l'oxygène de l'air par effet de ruissellement.

Une telle installation est particulièrement adaptée au traitement d'eaux résiduaires de communes ou collectivités de 2000 habitants équivalents (eH) ou moins.

Si l'on prend l'exemple de la France qui compte plus de 36 000 communes, on dénombre environ 34 650 communes de moins de 2000 habitants, ce qui correspond à une population d'environ 25 000 000 d'habitants, soit environ 40 % de la population totale de la France.

Le parc national français des stations d'épuration est composé d'environ 15 000 stations d'épuration dont environ 60 % de taille inférieure à 2000 eH. Près de 50 % de ces petites installations sont âgées de plus de 15 ans, et 30 % de plus de 20 ans. On peut donc considérer que ce parc ancien sera à renouveler à court terme.

Un traitement biologique par boues activées a souvent été mis en place par mode, alors que cette technique n'est pas adaptée à cette petite taille d'installation, en raison d'un coût d'investissement élevé et surtout d'un coût d'exploitation important. L'efficacité des installations à boues activées est souvent médiocre pour des capacités inférieures à 2000 eH.

En alternative au traitement par boues activées, pour les petites installations, on trouve principalement des filières de traitement de type lits bactériens, lagunages naturels, filtres plantés de roseaux, disques biologiques.

La technique des disques biologiques est largement utilisée dans le monde et notamment en Europe du Nord. Cette technique est parfaitement adaptée aux plus petites installations, de quelques dizaines à quelques milliers d'habitants équivalents. Sa compacité et sa faible hauteur sont des atouts majeurs pour une intégration discrète dans les sites exigeants. Il est même possible d'intégrer ces installations dans des sous-sols d'immeuble ou dans des petits bâtiments discrets. La faible consommation électrique est remarquable.

En particulier, pour la France, il s'agit de répondre aux objectifs et contraintes du nouvel Arrêté du 22 juin 2007 "relatif à la collecte, au transport et au traitement des eaux usées des agglomérations d'assainissement ainsi qu'à la surveillance de leur fonctionnement et de leur efficacité, et aux dispositifs d'assainissement non collectif recevant une charge brute organique supérieure à 1,2 kg/j de DBO₅" (20 habitants équivalents), paru au *Journal Officiel* en date du 14 juillet 2007.

| Paramètres | Concentration maxi | Rendement mini |
|---|---|---|
| DBO₅ | 35 mg/L | 60 % |
| DCO | | 60 % |
| MES | | 50 % |

On rappelle que l'expression DBO₅ désigne la demande biochimique d'oxygène mesurée au bout de 5 jours, DCO désigne la demande chimique d'oxygène et MES désigne les matières en suspension.

Le traitement des eaux usées par la technique des disques biologiques relève du procédé des cultures fixées. La biomasse épuratrice se développe sur les disques rotatifs et leur garnissage, notamment un garnissage en matière plastique de surface spécifique proche de 150 m²/m³. La quantité de biomasse qui va se développer sur le support dépend de la surface spécifique du matériau en contact et de l'épaisseur du biofilm qui peut varier de quelques centaines de microns à plusieurs millimètres.

Dans le cas des disques biologiques, le support des cultures fixées est mobile en rotation autour d'un axe. La rotation des disques va permettre le contact de la biomasse avec la pollution à traiter et l'oxygénation du milieu par effet de ruissellement de l'eau lorsque la zone portant la biomasse sort du liquide.

La vitesse linéaire du disque relative à l'eau est plus importante vers l'extérieur qu'au centre, et le ruissellement est ainsi plus important vers la périphérie du disque, avec une meilleure oxygénation et une érosion plus efficace du biofilm. De fait, on constate sur les unités de traitement que le biofilm peut atteindre une épaisseur de plusieurs millimètres au voisinage de l'axe de rotation, alors que cette épaisseur est plus réduite à l'extérieur.

La couche superficielle du biofilm reste une zone aérobie, mais les couches profondes sont en anaérobiose (couche noire significative). Cette situation généralement constatée ne permet pas une optimisation du traitement.

De plus, la surface mouillée par tour de rotation est largement supérieure à l'extérieur qu'à l'intérieur des disques (environ dix fois supérieure pour l'exemple d'un diamètre de 2 m).

En conséquence plus on s'éloigne du centre, plus le biofilm est fin, meilleure est l'oxygénation et plus la surface de contact est importante. L'intérêt est donc de favoriser une surface développée à l'extérieur des disques.

Pour se rapprocher d'une notion de charge à traiter par quantité de biomasse (charge massique des boues activées), il est fait référence, généralement, à une charge surfacique : g DBO₅/j par m² de surface développée. La capacité d'oxygénation est peu importante, ce qui oblige à limiter la charge à traiter notamment sur le premier étage pour des disques disposés en série. Du fait de cette faible capacité d'oxygénation, il n'est pas possible en général d'utiliser la technique des disques biologiques en première étape de traitement, avant un traitement biologique complémentaire. En outre, il est difficile d'envisager cette technique des disques biologiques en traitement tertiaire pour le seul traitement de l'azote (nitrification) du fait de l'impossibilité de maîtriser l'épaisseur du biofilm, qui doit être obligatoirement très fin pour ce traitement spécifique.

Ainsi, selon l'état de la technique, le traitement par disques biologiques est généralement réservé au traitement principal pour l'élimination de la pollution carbonée et, dans une moindre mesure, pour la pollution azotée avec des performances limitées de nitrification.

EP-A- 0 182 380 concerne une installation pour le traitement d'eaux résiduaires avec une série de disques ou tambours à garnissage, parallèles, montés sur un arbre horizontal, partiellement immergés dans l'eau à traiter et entraînés en rotation. Selon un exemple de réalisation, le garnissage des tambours est formé par des tubes constitués par des grillages ou des résilles. Les inconvénients évoqués précédemment subsistent dans une telle installation.

L'invention a pour but, surtout, d'optimiser l'aspect processus de la technique des disques biologiques avec une meilleure maîtrise de la quantité de biomasse en place dans le traitement, de la capacité d'oxygénation du système, des performances sur le traitement de l'azote (nitrification et dénitrification).

L'invention a également pour but d'améliorer les performances épuratoires des unités de traitement par disques biologiques grâce à la meilleure maîtrise de l'épaisseur du biofilm sur tout le garnissage, et une optimisation des conditions d'oxygénation du milieu.

Le maintien d'un biofilm fin, notamment d'une épaisseur de quelques centaines de microns, sur l'ensemble de la surface du matériau de remplissage des disques biologiques permet de préserver une zone de réaction biologique à dominante aérobie et donc une optimisation du traitement.

Selon l'invention, une installation pour le traitement d'eaux résiduaires urbaines et/ou industrielles comporte un bassin recevant l'eau à traiter et une série de disques à garnissage, parallèles verticaux, montés sur un arbre horizontal, partiellement immergés dans l'eau à traiter, et entraînés en rotation de sorte que la biomasse qui se développe à la surface du garnissage des disques est mise alternativement en contact avec l'eau à traiter et l'oxygène de l'air, la configuration du garnissage des disques étant choisie de telle sorte que la surface développée du garnissage en une zone du disque augmente avec la distance de cette zone à l'axe de rotation, de manière à permettre de développer une surface de contact d'autant plus importante que l'on se rapproche de l'extérieur du disque, et est caractérisée en ce que le garnissage présente des ondulations suivant une direction transversale au plan moyen du disque, et la fréquence des ondulations suivant la direction radiale augmente avec la distance à l'axe de rotation, tandis que l'amplitude des ondulations suivant une direction transversale au plan moyen du disque reste sensiblement constante.

La fréquence des ondulations suivant la direction radiale peut être proportionnelle à la distance à l'axe de rotation.

Le garnissage peut être composé de plaques à ondulations d'amplitude constante et de fréquence variable qui sont disposées symétriquement les unes contre les autres de manière à former des canaux qui débouchent dans des espaces radiaux.

Ceci permet de réaliser une surface développée plus importante vers l'extérieur du disque que vers le centre, avec une modulation graduelle de la fréquence en fonction de la distance à l'axe.

Cette configuration permet de tendre vers une épaisseur uniforme du biofilm quelle que soit la vitesse de rotation du disque. Les vitesses de rotation doivent rester suffisamment lentes pour ne pas engendrer d'effet de force centrifuge, ces vitesses étant de l'ordre de quelques tours à quelques dizaines de tours par minute.

Selon un autre aspect de l'invention, l'installation pour le traitement d'eaux résiduaires urbaines et/ou industrielles est caractérisée en ce qu'elle comporte un variateur de vitesse pour l'entraînement en rotation des disques et pour permettre d'adapter l'épaisseur du biofilm, en modulant la vitesse de rotation.

De préférence, le variateur est prévu pour assurer une plage de vitesses de rotation des disques comprises entre 5 et 25 tr/min, pour assurer principalement le traitement de la pollution carbonée, et une plage de vitesses réduites, comprises entre 0,1 tr/min et 0,5 tr/min pour un traitement de dénitrification.

Une vitesse plus rapide permet d'accélérer le ruissellement et l'érosion et donc de réduire l'épaisseur du biofilm. Cette augmentation de vitesse permet également d'améliorer l'oxygénation du milieu et donc de faire face à des demandes fortes en oxygène, par exemple pour une pointe de pollution, ou un premier étage de traitement, ou pour une nitrification.

Une vitesse plus lente permet de diminuer le ruissellement et l'érosion et donc de maintenir une épaisseur du biofilm plus importante. Cette diminution de vitesse pendant un temps relativement long (plusieurs dizaines de minutes) va entraîner, dans une certaine mesure, une réduction significative de l'oxygénation du milieu tout en maintenant le contact entre la biomasse et le substrat. Il en résulte une période anoxique qui permet d'assurer une élimination de l'azote nitrate par dénitrification biologique. Ce temps devra être réduit (10 à 30 minutes) pour garantir une bonne qualité du rejet, le pouvoir tampon dans ce genre d'ouvrage étant limité sauf à mettre en place un ouvrage de stockage d'une partie des effluents bruts à traiter pendant cette période d'anoxie. Cette situation ne permet plus alors de faire face aux demandes fortes en oxygène : pointe de pollution, premier étage de traitement, nitrification. Toutefois, il est possible pour un temps limité de maintenir cette faible vitesse pour assurer la dénitrification de l'azote (réduction de l'azote nitrate) sans préjudice au niveau du traitement de la pollution carbonée.

L'alternance de plages de vitesses de rotation élevées et lentes permet, avec une charge surfacique adaptée, d'obtenir de bonnes performances d'élimination de l'azote par nitrification-dénitrification.

L'invention concerne également un disque biologique à garnissage, pour une installation telle que définie précédemment, dans lequel la configuration du garnissage du disque est choisie de telle sorte que la surface développée du garnissage en une zone du disque augmente avec la distance de cette zone à l'axe du disque, caractérisé en ce que le garnissage présente des ondulations suivant une direction transversale au plan moyen du disque, la fréquence des ondulations suivant la direction radiale augmentant avec la distance à l'axe de rotation, tandis que l'amplitude des ondulations suivant une direction transversale au plan moyen du disque reste sensiblement constante.

Le garnissage peut être composé de plaques à ondulations d'amplitude constante et de fréquence variable qui sont disposées symétriquement les unes contre les autres de manière à former des canaux. Le garnissage peut être formé par un ensemble de secteurs trapézoïdaux dont la petite base se trouve au voisinage de l'axe géométrique du disque et dont la grande base est au voisinage du contour extérieur du disque, deux secteurs voisins étant séparés par un espace radial.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une coupe schématique axiale verticale d'une installation de traitement à disques biologiques selon l'invention.
Fig. 2 est une coupe schématique suivant un plan orthogonal à l'axe de rotation selon la ligne II-II de Fig. 1.
Fig. 3 est une coupe à plus grande échelle suivant la ligne III-III de Fig. 2, illustrant un disque avec garnissage selon l'invention,
Fig.4 est un détail en coupe à grande échelle de deux plaques de garnissage en cours d'assemblage, et

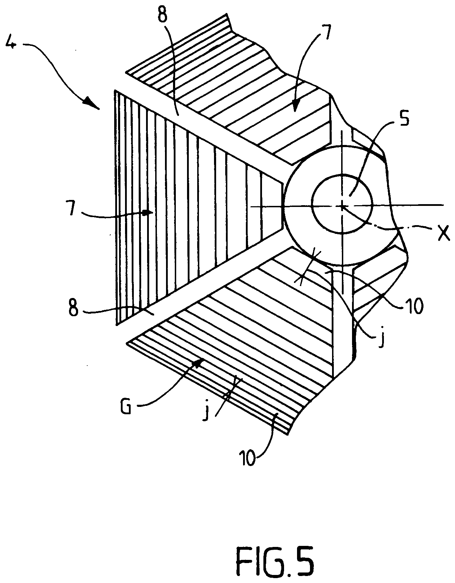

Fig. 5 est une vue partielle de gauche, à plus petite échelle, du disque de Fig. 3.

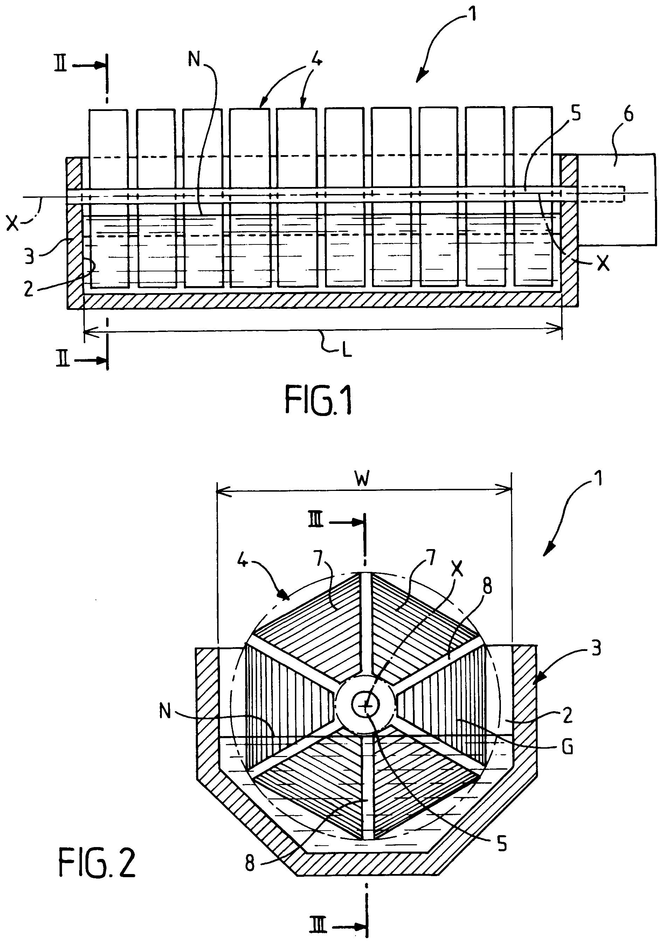

En se reportant aux dessins, notamment aux Fig. 1 et 2, on peut voir une installation 1 pour le traitement d'eaux résiduaires urbaines et/ou industrielles comportant un bassin 2 formé par le volume intérieur d'une cuve ou auge 3. Comme visible sur Fig.2, la cuve comporte deux parois opposées verticales parallèles reliées à une paroi de fond horizontale, notamment par deux parois convergeant vers le bas en particulier à 45°. La cuve 3 est avantageusement réalisée selon des dimensions permettant un transport par la route. A titre indicatif, la longueur intérieure L (Fig. 1) de la cuve peut être de l'ordre de 6 m tandis que sa largeur interne W (Fig. 2) peut être de l'ordre de 2,5 m. Une arrivée (non représentée) d'eau à traiter est prévue pour remplir la cuve 3 jusqu'à un niveau N. Une évacuation (non représentée) de l'eau traitée est également prévue. De préférence, le traitement s'effectue en continu.

L'installation comporte une série de disques 4 parallèles verticaux, fixés sur un arbre horizontal 5, monté rotatif dans des paliers prévus dans les parois d'extrémité de la cuve 3. L'arbre 5 traverse l'une des parois d'extrémité de la cuve pour venir en prise avec un système d'entraînement en rotation 6.

Les disques 4 comportent un garnissage G prévu pour permettre le développement de la biomasse à sa surface. Les disques 4 présentent ainsi une épaisseur axiale et constituent des tambours. Les disques 4 sont partiellement immergés dans l'eau à traiter, généralement à environ 40 % de leur surface. Les disques et garnissages peuvent être en polyéthylène, PVC ou autre matériel synthétique.

Comme visible sur Fig. 2, le garnissage G d'un disque 4, peut être formé par un ensemble de six secteurs trapézoïdaux 7, de préférence isocèles, dont la petite base se trouve au voisinage de l'arbre 5 et dont la grande base est au voisinage du contour extérieur du disque 4. Deux secteurs 7 voisins sont séparés par un espace radial 8. Les secteurs 7 peuvent être maintenus par une structure porteuse non représentée.

La configuration du garnissage G de disque est choisie de telle sorte que la surface développée du garnissage en une zone du disque augmente avec la distance de cette zone à l'axe géométrique de rotation X-X. La surface développée d'une zone ondulée correspond à la surface de la zone lorsqu'elle a été aplatie, c'est-à-dire développée selon un plan.

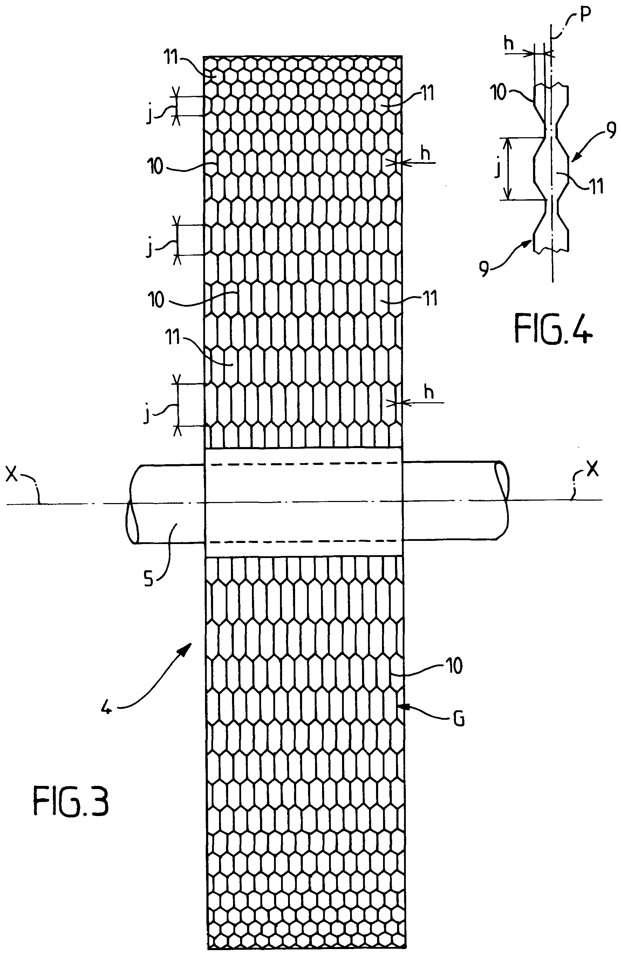

Le garnissage G est avantageusement constitué par des plaques 9 comportant des ondulations 10 (Fig. 3) d'allure trapézoïdale suivant une direction transversale, essentiellement perpendiculaire, au plan moyen du disque. L'amplitude h (Fig. 3) des ondulations suivant une direction orthogonale au disque est de préférence constante. Par contre, la fréquence des ondulations augmente avec la distance à l'axe de rotation. Autrement dit la dimension radiale j des ondulations diminue lorsque la distance à l'axe de rotation augmente. La surface développée d'une zone de la plaque 9 augmente ainsi avec la distance de cette zone à l'axe de rotation.

Comme mieux visible sur Fig.4 où deux plaques en cours d'assemblage sont partiellement représentées, les plaques 9 sont disposées les unes contre les autres symétriquement par rapport à un plan P orthogonal à l'axe de rotation de manière à former des canaux tels que 11 dont la section transversale, hexagonale dans l'exemple considéré, diminue au fur et à mesure que l'on s'éloigne radialement de l'axe de rotation. Les plaques 9, notamment lorsqu'elles sont en matière plastique, peuvent être assemblées par collage.

Vue de face, comme sur Fig. 3, la configuration du garnissage ressemble à une configuration en nids d'abeilles, lui conférant une bonne rigidité. Les canaux 11 débouchent à chaque extrémité dans un espace radial 8. L'eau à traiter passe dans les canaux 11 lors de la rotation du disque 4. Les dimensions de la section transversale des canaux 11 sont maintenues suffisantes (largeur et hauteur au moins égales à environ 15 mm) pour éviter l'obturation des canaux par le biofilm et autres particules solides des eaux brutes à traiter.

Avantageusement, la fréquence des ondulations 10 suivant la direction radiale est sensiblement proportionnelle à la distance à l'axe de rotation.

Le système d'entraînement en rotation 6 comporte un variateur de vitesse permettant de modifier la vitesse de rotation des disques 4.

Une plage de vitesses relativement grandes, notamment de 5 à 25 tr/min, est prévue pour assurer une bonne oxygénation du biofilm et principalement le traitement de la pollution carbonée. Une plage de vitesses réduites, notamment comprises entre 0,1 tr/min et 0,5 tr/min est prévue pour un traitement en anoxie et la réduction des nitrates, c'est-à-dire pour assurer un traitement de dénitrification.

En outre, la vitesse de rotation peut être modifiée en fonction de la température et de l'épaisseur souhaitée pour le biofilm.

La configuration du garnissage G permet de disposer d'une surface développée plus étendue dans les zones de rotation où la vitesse linéaire de sortie de l'eau est plus élevée. Grâce à cette configuration, l'épaisseur de biofilm est maîtrisée.

La même installation permet de traiter la pollution carbonée en faisant tourner les disques 4 à une vitesse relativement élevée comprise entre 5 et 25 tr/min, favorable à l'oxygénation.

Au cours d'une autre phase, en réduisant la vitesse de rotation à une valeur inférieure à 0,5 t/min, on peut assurer une dénitrification de l'eau traitée.

La configuration adoptée pour le garnissage permet d'éviter un épaississement du biofilm au voisinage de l'axe de rotation.

## Revendications

1. Installation pour le traitement d'eaux résiduaires urbaines et/ou industrielles comportant un bassin (2) recevant l'eau à traiter et une série de disques (4) à garnissage (G) selon la revendication 6, parallèles verticaux, montés sur un arbre horizontal (5), partiellement immergés dans l'eau à traiter, et entraînés en rotation de sorte que la biomasse qui se développe à la surface du garnissage des disques est mise alternativement en contact avec l'eau à traiter et l'oxygène de l'air, dans laquelle la configuration du garnissage (G) des disques (4) est choisie de telle sorte que la surface développée du garnissage en une zone du disque augmente avec la distance de cette zone à l'axe de rotation (X-X), de manière à permettre de développer une surface de contact d'autant plus importante que l'on se rapproche de l'extérieur du disque, **caractérisée en ce que** le garnissage (G) présente des ondulations (10) suivant une direction transversale au plan moyen du disque, et la fréquence des ondulations (10) suivant la direction radiale augmente avec la distance à l'axe de rotation, tandis que l'amplitude (h) des ondulations suivant une direction transversale au plan moyen du disque reste sensiblement constante.

2. Installation selon la revendication 1, **caractérisée en ce que** la fréquence des ondulations (10) suivant la direction radiale est proportionnelle à la distance à l'axe de rotation.

3. Installation selon la revendication 1 ou 2, **caractérisée en ce que** le garnissage est composé de plaques (9) à ondulations d'amplitude (h) constante et de fréquence variable qui sont disposées symétriquement les unes contre les autres de manière à former des canaux (11) qui débouchent dans des espaces radiaux (8).

4. Installation selon l'une quelconque des revendications 1 à 3, **caractérisée en ce que** le système d'entraînement en rotation (6) comporte un variateur de vitesse pour l'entraînement en rotation des disques et permettre d'adapter l'épaisseur du biofilm en modulant la vitesse de rotation.

5. Installation selon la revendication 4, **caractérisée en ce que** le variateur est prévu pour assurer une plage de vitesses de rotation des disques comprises entre 5 et 25 tr/min, pour assurer principalement le traitement de la pollution carbonée, et une plage de vitesses réduites, comprises entre 0,1 tr/min et 0,5 tr/min pour un traitement de dénitrification.

6. Disque biologique à garnissage pour une installation selon l'une quelconque des revendications précédentes, dans lequel la configuration du garnissage (G) du disque (4) est choisie de telle sorte que la surface développée du garnissage en une zone du disque augmente avec la distance de cette zone à l'axe géométrique du disque, **caractérisé en ce que** le garnissage présente des ondulations (10) suivant une direction transversale au plan moyen du disque, la fréquence des ondulations (10) suivant la direction radiale augmente avec la distance à l'axe géométrique du disque, tandis que l'amplitude (h) des ondulations suivant une direction transversale au plan moyen du disque reste sensiblement constante.

7. Disque biologique selon la revendication 6, **caractérisé en ce que** le garnissage est composé de plaques (9) à ondulations d'amplitude (h) constante et de fréquence variable qui sont disposées symétriquement les unes contre les autres de manière à former des canaux (11).

8. Disque biologique selon la revendication 7, **caractérisé en ce que** le garnissage est formé par un ensemble de secteurs trapézoïdaux (7) dont la petite base se trouve au voisinage de l'axe géométrique du disque et dont la grande base est au voisinage du contour extérieur du disque (4), deux secteurs (7) voisins étant séparés par un espace radial (8).

## Patentansprüche

1. Anlage zur Behandlung von städtischen und/oder industriellen Abwässern mit einem Becken (2), welches das zu behandelnde Wasser aufnimmt, und einer Reihe von mit einer Garnitur (G) nach Anspruch 6 versehenen parallelen und vertikalen Scheiben (4), welche auf einer horizontalen Welle (5) angebracht sind, teilweise in das zu behandelnde Wasser eingetaucht sind und derart drehend angetrieben sind, dass die Biomasse, die sich auf oder Oberfläche der Garnitur der Scheiben entwickelt abwechselnd in Kontakt mit dem zu behandelnden Wasser und dem Sauerstoff der Luft gebracht wird, wobei die Ausbildung der Garnitur (G) der Scheiben (4) derart gewählt ist, dass die Oberfläche der Garnitur in einer Zone der Scheibe mit dem Abstand dieser Zone von der Drehachse (X-X) zunimmt, um das Entwickeln einer Kontaktfläche zu ermöglichen, die umso größer ist, je näher sie der Außenseite der Scheibe ist, **dadurch gekennzeichnet, dass** die Garnitur (G) in einer zur Mittelebene der Scheibe quer verlaufenden Richtung Wellungen (10) aufweist, und die Frequenz der Wellungen (10) in radialer Richtung mit dem Abstand von der Drehachse zunimmt, während die Amplitude (h) der Wellungen in einer zur Mittelebene der Scheibe quer verlaufenden Richtung im Wesentlichen konstant bleibt.

2. Anlage nach Anspruch 1, **dadurch gekennzeichnet, dass** die Frequenz der Wellungen (10) in radialer Richtung proportional zum Abstand von der Drehachse ist.

3. Anlage nach Anspruch 1 oder 2, **dadurch gekennzeichnet, dass** die Garnitur aus Platten (9) mit Wellungen von konstanter Amplitude (h) und variabler Frequenz gebildet ist, welche symmetrisch gegeneinander liegend derart angeordnet sind, dass sie Kanäle (11) bilden, welche in radiale Räume (8) münden.

4. Anlage nach einem der Ansprüche 1 bis 3, **dadurch gekennzeichnet, dass** das Drehantriebssystem (6) einen Geschwindigkeitsregler zum drehenden Antreiben der Scheiben und zum Ermöglichen des Anpassens der Dicke des Biofilms durch Modulieren der Drehgeschwindigkeit aufweist.

5. Anlage nach Anspruch 4, **dadurch gekennzeichnet, dass** der Regler vorgesehen ist, um einen Drehgeschwindigkeitsbereich der Scheiben zu gewährleisten, der zwischen 5 und 25 U/min liegt, um hauptsächlich die Behandlung kohlenstoffhaltiger Verunreinigungen zu ermöglichen, und einen Bereich geringerer Geschwindigkeiten, der zwischen 0,1 U/min und 0,5 U/min liegt, für eine Denitrifikationsbehandlung zu gewährleisten.

6. Biologische Scheibe mit Garnitur für eine Anlage nach einem der vorhergehenden Ansprüche, bei welcher die Ausbildung der Garnitur (G) der Scheibe (4) derart gewählt ist, dass die Oberfläche der Garnitur in einer Zone der Scheibe mit dem Abstand dieser Zone von der geometrischen Drehachse zunimmt, **dadurch gekennzeichnet, dass** die Garnitur in einer zur Mittelebene der Scheibe quer verlaufenden Richtung Wellungen (10) aufweist, wobei die Frequenz der Wellungen (10) in radialer Richtung mit dem Abstand von der Drehachse zunimmt, während die Amplitude (h) der Wellungen in einer zur Mittelebene der Scheibe quer verlaufenden Richtung im Wesentlichen konstant bleibt.

7. Biologische Scheibe nach Anspruch 6, **dadurch gekennzeichnet, dass** die Garnitur aus Platten (9) mit Wellungen von konstanter Amplitude (h) und variabler Frequenz gebildet ist, welche symmetrisch gegeneinander liegend derart angeordnet sind, dass sie Kanäle (11) bilden.

8. Biologische Scheibe nach Anspruch 7, **dadurch gekennzeichnet, dass** die Garnitur aus einer Anordnung trapezförmiger Sektoren (7) gebildet ist, deren kleine Basis sich in der Nähe der geometrischen Achse der Scheibe befindet, und deren große Basis sich in der Nähe der Außenkontur der Scheibe (4) befindet, wobei zwei benachbarte Sektoren (7) durch einen radialen Raum beabstandet sind.

## Claims

1. An installation for the treatment of municipal and/or industrial wastewater, comprising a basin (2) that receives the water to be treated and a series of disks (4) with packing (G) according to claim 6, said disks being parallel, vertical, mounted on a horizontal shaft (5), partially immersed in the water to be treated and rotated in such a way that the biomass that grows on the surface of the packing of the disks is alternately brought into contact with the water to be treated and with oxygen from the air, in which the configuration of the packing (G) of the disks (4) is chosen in such a way that the developed surface area of the packing in one zone of the disk increases with the distance of this zone from the rotation axis (X-X), so as to develop an increasing contact area on approaching the outside of the disk, **characterized in that** the packing (G) has corrugations (10) along a direction transverse to the mean plane of the disk and the frequency of the corrugations (10) along the radial direction increases with the distance from the rotation axis, whereas the amplitude (h) of the corrugations along a direction transverse to the mean plane of the disk remains approximately constant.

2. The installation as claimed in claim 1, **characterized in that** the frequency of the corrugations (10) along the radial direction is proportional to the distance from the rotation axis.

3. The installation as claimed in claim 1 or 2, **characterized in that** the packing is composed of plates (9) having corrugations of constant amplitude (h) and variable frequency, which plates are arranged symmetrically against one another so as to form channels (11) that open into radial spaces (8).

4. The installation as claimed in any one of claims 1 to 3, **characterized in that** the rotatary drive system (6) includes a variable speed device for rotating the disks and for adapting the thickness of the biofilm by varying the rotation speed.

5. The installation as claimed in claim 4, **characterized in that** the variable speed device is designed to provide a range of disk rotation speeds of between 5 and 25 rpm, mainly to ensure treatment of the carbon-containing pollution, and a range of slower speeds, of between 0.1 rpm and 0.5 rpm, for a denitrification treatment.

6. A biological disk with packing for an installation as claimed in any one of the preceding claims, in which the configuration of the packing (G) of the disk (4) is chosen in such a way that the developed surface area of the packing in one zone of the disk increases with the distance of this zone from the geometrical axis of the disk, **characterized in that** the packing has corrugations (10) along a direction transverse to the mean plane of the disk and the frequency of the corrugations (10) along the radial direction increases with the distance from the geometrical axis of the disk, whereas the amplitude (h) of the corrugations along a direction transverse to the mean plane of the disk remains approximately constant.

7. The biological disk as claimed in claim 6, **characterized in that** the packing is composed of plates (9) with corrugations of constant amplitude (h) and of variable frequency that are placed symmetrically against one another so as to form channels (11).

8. The biological disk as claimed in claim 7, **characterized in that** the packing is formed by an assembly of trapezoidal sectors (7), the short base of which is in the vicinity of the geometrical axis of the disk and the long base of which is in the vicinity of the external perimeter of the disk (4), two adjacent sectors (7) being separated by a radial space (8).
